# DEMANDE DE BREVET EUROPEEN

(11) **EP 0 866 230 A1**
(43) Date de publication de la demande: **23.09.1998**
(21) Numéro de dépôt: 98400615.5
(22) Date de dépôt: 16.03.1998
(51) Int. Cl.: F16B 21/02, B62D 1/16

(54) **Dispositif de fixation de deux organes l'un sur l'autre**

(30) Priorité: 19.03.1997 FR 9703354
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR)
(74) Mandataire: Habasque, Etienne Joel Jean-François

(57) **Abrégé**

Ce dispositif est caractérisé en ce qu'un premier organe (1) comporte au moins un évidemment (7,8) de réception d'une tige d'accrochage (9) de celui-ci sur le second organe (2), la tige (9) ayant une section aplatie présentant une petite et une grande dimensions, en ce que le second organe (2) comporte au moins une empreinte (12,13) de réception de cette tige (9), présentant une première portion (12a,13a) en forme d'ouverture d'engagement de la tige (9) par sa petite dimension, dans une première orientation, et une seconde portion (12b,13b) de blocage par serrage de celle-ci lorsqu'elle est déplacée vers une seconde orientation, dans l'empreinte, et en ce que la tige (9) et l'un des organes (2) comportent des moyens de verrouillage (16) de cette tige (9) dans sa seconde orientation.

## Description

La présente invention concerne un dispositif de fixation de deux organes l'un sur l'autre, dont l'un est un ensemble de colonne de direction de véhicule automobile et dont l'autre est une structure de fixation de celui-ci sur le reste de la structure du véhicule.

D'une façon générale, un ensemble de colonne de direction de véhicule automobile comporte un corps de colonne de direction, dans lequel est monté rotatif un arbre de direction dont une extrémité est adaptée pour recevoir un volant de direction du véhicule et dont une autre extrémité est adaptée pour être reliée par exemple par l'intermédiaire d'une articulation à la cardan, au reste du mécanisme de direction du véhicule.

Un tel ensemble comporte à proximité de chacune de ses extrémités des moyens de fixation adaptés pour assurer l'accrochage de celui-ci sur une structure de fixation associée au reste de la structure du véhicule.

Dans le cas d'ensembles de colonne de direction réglables en position, les moyens de fixation prévus à l'une des extrémités de ce corps comprennent des moyens de réglage de celui-ci par exemple en positions angulaire et axiale.

Les moyens de fixation prévus à l'autre extrémité du corps de colonne comprennent alors par exemple des moyens de guidage de celui-ci, comprenant par exemple des moyens d'articulation de ce corps par rapport au reste de la structure de fixation.

Dans l'état de la technique, ces moyens d'articulation comprennent par exemple des bras ou biellettes complémentaires du corps de colonne et du reste de la structure de fixation, ces bras ou biellettes comportant des évidements de passage d'une tige d'accrochage adaptée pour assurer l'accrochage de cette extrémité du corps de colonne sur le reste de la structure de fixation.

On conçoit cependant qu'une telle structure présente un certain nombre d'inconvénients notamment au niveau de son montage relativement complexe et long.

En effet, lors du montage d'un tel ensemble de colonne sur le reste de la structure de fixation, un opérateur de montage doit tout d'abord positionner correctement les bras ou biellettes correspondants de l'ensemble de colonne et du reste de la structure de fixation, de manière que les évidements de ceux-ci viennent en regard les uns des autres.

Puis, il doit engager la tige d'accrochage axialement dans les évidements de ces bras ou biellettes et enfin engager et serrer sur l'une des extrémités de cette tige par exemple un organe de serrage permettant de sécuriser cette fixation.

On conçoit que toutes ces opérations sont relativement longues et délicates à mettre en oeuvre.

Le but de l'invention est donc de résoudre ces problèmes.

A cet effet, l'invention a pour objet un dispositif de fixation de deux organes l'un sur l'autre, dont l'un est un ensemble de colonne de direction de véhicule automobile et l'autre, une structure de fixation de celui-ci sur le reste de la structure du véhicule, caractérisé en ce qu'un premier des organes comporte au moins un évidemment de réception à rotation d'une tige d'accrochage de celui-ci sur le second des organes, ladite tige ayant une section aplatie présentant une petite et une grande dimensions, en ce que le second organe comporte au moins une empreinte de réception de cette tige, présentant une première portion en forme d'ouverture latérale d'engagement de la tige par sa petite dimension, dans une première orientation, et une seconde portion de blocage par serrage de celle-ci, lorsqu'elle est déplacée angulairement de sa première orientation vers une seconde orientation, décalée par rapport à la première, dans l'empreinte, et en ce que la tige et l'un des organes comportent des moyens complémentaires de verrouillage de cette tige dans sa seconde orientation.

Avantageusement, la tige et le premier organe comportent des moyens complémentaires débrayables de retenue de celle-ci dans une orientation prédéterminée par rapport à ce premier organe, correspondant à la première orientation d'engagement de cette tige dans l'empreinte du second organe.

L'invention sera mieux comprise à l'aide de la description qui va suivre donnée uniquement à titre d'exemple et faite en se référant aux dessins annexés sur lesquels :
- la figure 1 représente une vue en perspective illustrant un exemple de réalisation d'un dispositif de fixation de deux organes selon l'invention ;
- la figure 2 représente une vue en perspective d'un exemple de réalisation d'une tige d'accrochage entrant dans la constitution d'un tel dispositif ;
- les figures 3 et 4 illustrent le fonctionnement d'un tel dispositif de fixation ; et
- la figure 5 représente une vue de dessus d'un flan de tôle à partir duquel peut être réalisée une tige d'accrochage entrant dans la constitution du dispositif de fixation selon l'invention.

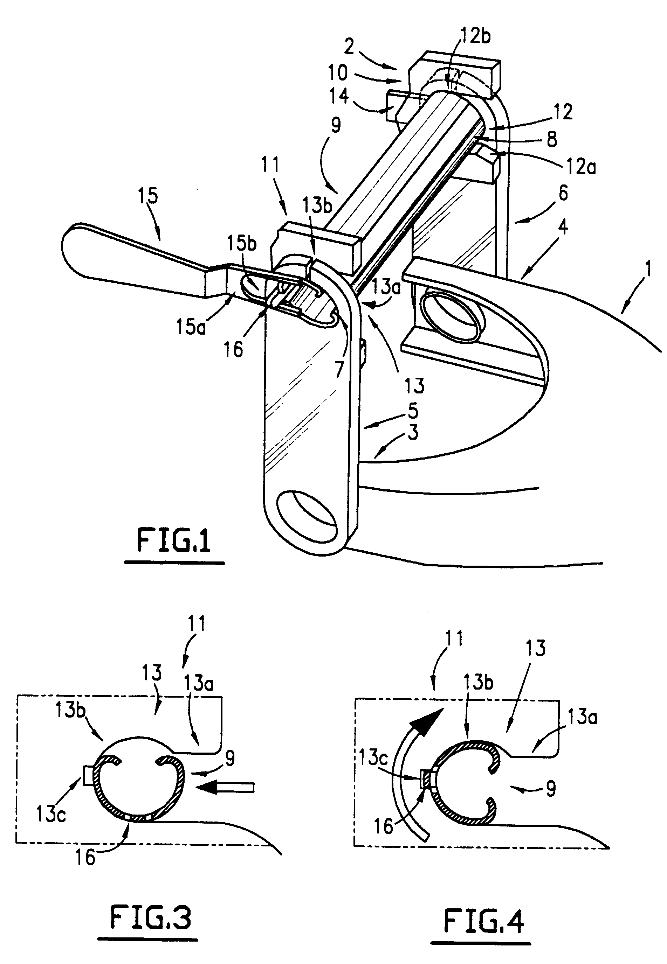

Ainsi qu'on peut le voir sur ces figures, un dispositif de fixation selon l'invention permet d'assurer la fixation de deux organes l'un sur l'autre, l'un de ces organes étant un ensemble de colonne de direction de véhicule automobile, désigné par la référence générale 1 sur la figure 1, tandis que l'autre organe est une structure de fixation de celui-ci sur le reste de la structure du véhicule, cette structure de fixation étant désignée par la référence générale 2.

L'ensemble de colonne de direction désigné par la référence générale 1 comporte par exemple un corps de colonne de direction, présentant à son extrémité correspondante par exemple deux bras d'articulation désignés par les références générales 3 et 4 sur cette figure 1, sur lesquels sont articulées par exemple des biellettes de suspension, désignées par les références générales 5 et 6.

On notera que l'articulation des extrémités correspondantes des biellettes 5 et 6 sur les bras 3 et 4 du corps de colonne peut être assurée par l'intermédiaire de canons de pivotement venus de matière avec ces pièces ou autres.

A l'autre extrémité, ces biellettes de suspension 5 et 6 comportent par exemple des évidements 7 et 8 de réception à rotation d'une tige d'accrochage de celui-ci sur le second des organes.

Cette tige est désignée par la référence générale 9 sur ces figures.

Comme cela sera décrit plus en détail par la suite, cette tige a une section aplatie présentant une petite dimension et une grande dimension.

Le second organe 2 peut quant à lui comporter par exemple deux bras de support, désignés par les références générales 10 et 11 sur ces figures, qui sont munis chacun par exemple d'une empreinte de réception de la tige d'accrochage 9, ces empreintes étant désignées par les références générales 12 et 13 respectivement.

Comme on peut le voir sur ces figures, et en particulier sur les figures 1,3 et 4, chaque empreinte de réception 12,13 présente une première portion 12a,13a en forme d'ouverture latérale d'engagement de la tige par sa petite dimension, dans une première orientation, et une seconde portion 12b,13b dont par exemple au moins une zone présente une dimension inférieure à la grande dimension de la tige, pour bloquer celle-ci par serrage lorsqu'elle est déplacée angulairement de sa première orientation vers une seconde orientation, décalée par rapport à la première, dans l'empreinte.

Pour des raisons de clarté on se reportera à ces figures 3 et 4 pour illustrer ce fonctionnement, ces figures représentant par exemple le bras 11 de la structure de fixation 2, la tige d'accrochage 9 et l'empreinte 13 de réception de cette tige, ménagée dans le bras 11 de la structure de fixation.

Sur ces figures, on reconnaît la première portion en forme d'ouverture latérale de l'empreinte 13 du bras 11, désignée par la référence générale 13a, et la seconde portion de celle-ci, désignée par la référence générale 13b.

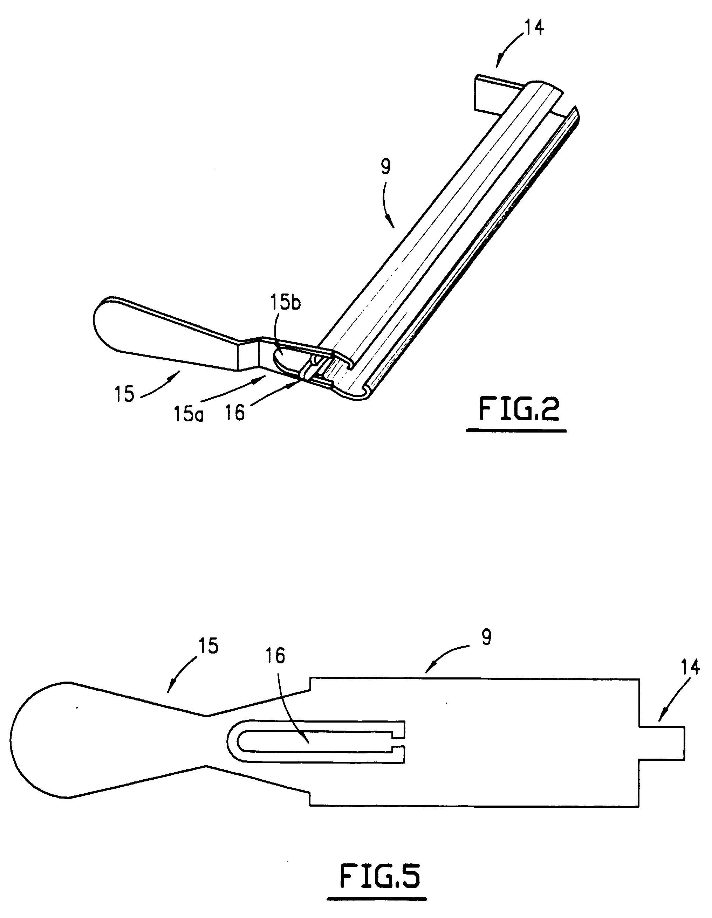

Comme cela est représenté sur les figures 2 et 5, la tige d'accrochage 9 peut être réalisée par découpe et roulage d'un flan de tôle pour présenter une certaine élasticité, cette tige d'accrochage 9 comportant à une extrémité une languette radiale 14 par exemple venue de matière avec le reste de celle-ci, et adaptée pour constituer des moyens de butée axiale à cette extrémité de cette tige.

A son autre extrémité, cette tige d'accrochage 9 comporte par exemple un levier de manoeuvre, désigné par la référence générale 15, permettant à un opérateur de déplacer celle-ci entre ses première et seconde orientations.

Ce levier de manoeuvre 15 peut également par exemple être venu de matière avec le reste de la tige 9 et comporter un épaulement, désigné par la référence générale 15a sur les figures 1 et 2, constituant des moyens de butée axiale à l'extrémité correspondante de cette tige, pour assurer un maintien axial en position de la tige, par rapport aux organes à fixer.

Par ailleurs, cette tige 9 peut également comporter, par exemple à son extrémité munie du levier 15, une languette élastique, désignée par la référence générale 16, dont l'extrémité fait saillie au delà du levier 15 à travers un évidemment 15b de celui-ci pour pouvoir être accessible à un opérateur.

Comme cela sera décrit plus en détail par la suite, cette languette 16 peut constituer à la fois des moyens de retenue débrayables de cette tige 9 dans une orientation prédéterminée par rapport au premier organe 1, pour permettre son engagement direct dans la ou chaque empreinte correspondante du second organe et des moyens de verrouillage de cette tige dans sa seconde orientation par rapport à ce second organe.

On conçoit en effet que l'ensemble de colonne de direction 1 peut se présenter sous la forme d'un sous-système, dans lequel la tige d'accrochage 9 est engagée dans les évidements correspondants 7 et 8 des biellettes 5 et 6 de suspension de cet ensemble.

Celles-ci peuvent par exemple être fendues pour présenter une élasticité de rattrapage des jeux de montage.

Dans ce cas, la tige d'accrochage 9 est retenue par rapport à ce premier organe, par exemple par serrage ou autre dans les évidements des biellettes de celui-ci, dans une orientation prédéterminée correspondant à la première orientation d'engagement direct de celle-ci dans la ou chaque empreinte du second organe.

La languette élastique 16 décrite précédemment peut également coopérer par exemple avec des moyens complémentaires de ce premier organe, ménagés par exemple dans l'évidement correspondant de réception à rotation de celle-ci, prévu dans la biellette correspondante de suspension.

La retenue de cette tige d'accrochage 9 dans cette orientation peut être assurée par exemple par friction entre la languette élastique 16 et le reste de la biellette correspondante ou par engagement de cette languette dans un décrochement correspondant de cette biellette.

Lorsque l'opérateur souhaite fixer l'ensemble de colonne de direction sur la structure de fixation de celui-ci sur le reste du véhicule, il peut alors engager directement cette tige dans la ou chaque empreinte correspondante du second organe, la tige 9 étant dans l'orientation d'engagement direct.

Dans cette orientation, la tige se présente selon sa petite dimension, comme on peut le voir sur la figure 3, de sorte qu'elle peut passer directement à travers la première 12a,13a en forme d'ouverture latérale d'engagement de la ou de chaque empreinte du second organe, sans intervention de l'opérateur de montage.

Une fois que cette tige est complètement engagée dans la ou chaque empreinte, elle se retrouve dans la seconde 12b,13b de celle-ci, de sorte que l'opérateur peut alors manoeuvrer le levier 15 de déplacement angulaire de cette tige 9 de la première orientation d'engagement représentée sur la figure 3, vers une seconde orientation de blocage en position représentée sur la figure 4, qui est donc décalée angulairement par rapport à la première, pour permettre un blocage de cette tige par serrage dans cette seconde portion 12b,13b de l'empreinte, celle-ci présentant par exemple au moins une zone de dimension inférieure à la grande dimension de la tige.

De préférence, cette zone de l'empreinte présente alors un profil évolutif permettant un serrage progressif de la tige lors de son déplacement angulaire entre ses deux orientations.

Pour permettre ce déplacement, l'opérateur peut être amené à appuyer sur la languette élastique 16 pour la dégager d'un décrochement correspondant du premier organe comme cela a été indiqué précédemment.

Ce dégagement peut également être automatique lors de l'engagement de la tige dans la première portion en forme d'ouverture latérale de l'empreinte correspondante (figure 3).

Lorsque la tige d'accrochage 9 est dans sa seconde orientation dans l'empreinte correspondante du second organe, la languette 16 peut être adaptée pour venir s'engager, comme on peut le voir la figure 4, par exemple dans un décrochement 13c de cette empreinte, afin d'assurer un verrouillage en position de cette tige dans l'empreinte, dans sa seconde orientation.

La tige ne peut donc plus se dégager accidentellement de l'empreinte correspondante.

Cependant, pour permettre le démontage de celle-ci et donc de l'ensemble de la structure de fixation, l'opérateur peut agir sur la languette 16 pour la dégager du décrochement correspondant 13c de cette empreinte, ce qui lui permet de déplacer angulairement la tige d'accrochage de sa seconde orientation vers sa première orientation afin de permettre un dégagement de la tige et donc le démontage de l'ensemble de colonne de la structure de fixation.

Il va de soi bien entendu que différents modes de réalisation de ce dispositif peuvent être envisagés.

C'est ainsi par exemple que le premier et le second organes peuvent être munis uniquement d'un seul évidement de réception à rotation de la tige et d'une seule empreinte de réception de celle-ci, respectivement.

Bien entendu, la tige peut également présenter des formes différentes de celles décrites, et être réalisée d'une façon différente de celle décrite.

C'est ainsi que cette tige peut par exemple être moulée d'une seule pièce en matière plastique au lieu d'être réalisée à partir d'un flan de tête découpé et roulé.

Par ailleurs, la languette élastique 16 de cette tige peut également être adaptée pour s'étendre dans la seconde orientation de celle-ci, dans la première portion en forme d'ouverture latérale d'engagement de l'empreinte correspondante, cette languette coopérant alors avec les bords de cette ouverture pour empêcher tout dégagement accidentel de la tige, de l'empreinte.

Une languette de ce type peut également être prévue à chaque extrémité de la tige.

On conçoit alors que le dispositif de fixation selon l'invention présente un certain nombre d'avantages par rapport aux dispositifs de l'état- de la technique dans la mesure où la tige d'accrochage des organes l'un sur l'autre est portée par l'un de ceux-ci, ce qui permet un montage automatique de ces organes l'un sur l'autre, le verrouillage en position des organes l'un par rapport à l'autre se faisant par un simple déplacement angulaire de la tige par rapport à ces organes, entre une première orientation angulaire d'engagement de la tige portée par l'un des organes dans une empreinte de l'autre organe, et une seconde orientation, de serrage et de verrouillage de la tige en position d'accrochage, dans cet autre organe.

De plus, le montage sous contrainte de la tige dans l'empreinte correspondante permet d'obtenir un montage sans jeu des organes l'un sur l'autre.

Bien entendu, des moyens de manoeuvre autres qu'un levier peuvent être envisagés pour déplacer la tige entre ses première et seconde orientations.

Ces moyens peuvent par exemple comporter une portion de forme adaptée pour coopérer avec un outil amovible.

Le blocage par serrage de la tige dans la ou chaque empreinte peut également être obtenu d'une manière différente de celle décrite, de même que le verrouillage de celle-ci dans sa seconde orientation dans cette ou ces empreintes du second organe.

## Revendications

1. Dispositif de fixation de deux organes l'un sur l'autre, dont l'un (1) est un ensemble de colonne de direction de véhicule automobile et l'autre (2), une structure de fixation de celui-ci sur le reste de la structure du véhicule, caractérisé en ce qu'un premier (1) des organes comporte au moins un évidemment (7,8) de réception à rotation d'une tige d'accrochage (9) de celui-ci sur le second des organes (2), ladite tige (9) ayant une section aplatie présentant une petite et une grande dimensions, en ce que le second organe (2) comporte au moins une empreinte (12,13) de réception de cette tige (9), présentant une première portion (12a,13a) en forme d'ouverture latérale d'engagement de la tige (9) par sa petite dimension, dans une première orientation, et une seconde portion (12b,13b) de blocage par serrage de celle-ci, lorsqu'elle est déplacée angulairement de sa première orientation vers sa seconde orientation, décalée par rapport à la première, dans l'empreinte, et en ce que la tige (9) et l'un des organes (2) comportent des moyens (16,13c) de verrouillage de cette tige (9) dans sa seconde orientation.

2. Dispositif de fixation selon la revendication 1, caractérisé en ce que la tige (9) et le premier organe (1) comportent des moyens complémentaires débrayables (16,7) de retenue de celle-ci dans une orientation prédéterminée par rapport à cet organe, correspondant à la première orientation d'engagement de cette tige (9) dans la ou chaque empreinte (12,13) du second organe.

3. Dispositif de fixation selon la revendication 1 ou 2, caractérisé en ce que les moyens de verrouillage de la tige (9) dans la seconde orientation comprennent au moins une languette élastique (16) de la tige (9) adaptée pour coopérer avec un décrochement (13c) du second organe pour la verrouiller en position.

4. Dispositif de fixation selon la revendication 2 ou 3, caractérisé en ce que les moyens complémentaires débrayables de retenue de la tige (9) dans l'orientation prédéterminée par rapport au premier organe (1) comprennent au moins une languette élastique (16) de la tige adaptée pour coopérer avec le ou l'un des évidements (7) de cet organe pour la retenir dans cette orientation.

5. Dispositif de fixation selon les revendications 3 et 4, caractérisé en ce que la languette des moyens de verrouillage et des moyens de retenue est constituée par une seule et même languette (16) de la tige (9).

6. Dispositif de fixation selon l'une quelconque des revendications précédente, caractérisé en ce que la tige (9) comporte à chacune de ses extrémités des moyens de butée axiale.

7. Dispositif de fixation selon l'une quelconque des revendications précédentes, caractérisé en ce que la tige (9) comporte à au moins l'une de ses extrémités, des moyens de manoeuvre (15) permettant son déplacement entre ses première et seconde orientations.

8. Dispositif de fixation selon la revendication 7, caractérisé en ce que les moyens de manoeuvre se présentent sous la forme d'un levier (15) actionnable pour un opérateur de montage.

9. Dispositif de fixation selon les revendications 6,7 et 8, caractérisé en ce que les moyens de butée axiale prévus à l'une des extrémités de la tige (9) se présentent sous la forme d'une partie en saillie radiale (14) de celle-ci, tandis que les moyens de butée prévus à l'autre extrémité de la tige sont constitués par un épaulement (15a) du levier (15).

10. Dispositif de fixation selon la revendication 9, caractérisé en ce que l'extrémité correspondante de la languette élastique (16) des moyens de verrouillage et de retenue est adaptée pour faire saillie au delà du levier (15) à travers un évidemment (15b) de celui-ci pour permettre son actionnement par un opérateur.

11. Dispositif de fixation selon l'une quelconque des revendications précédentes, caractérisé en ce que la seconde portion (12b,13b) de la ou chaque empreinte présente au moins une zone de dimension inférieure à la grande dimension de la tige (9) et de profil évolutif permettant un serrage progressif de la tige (9).

12. Dispositif de fixation selon l'une quelconque des revendications précédentes, caractérisé en ce que ladite tige d'accrochage (9) est réalisée à partir d'un flan de tôle découpé et roulé.

13. Dispositif de fixation selon l'une quelconque des revendications 1 à 11, caractérisé en ce que ladite tige d'accrochage est réalisée en matière plastique par moulage.
